Europäisches Patentamt

European Patent Office

Office européen des brevets

(11) Veröffentlichungsnummer: **0 177 944**
A2

# (12) EUROPÄISCHE PATENTANMELDUNG

(21) Anmeldenummer: 85112777.9

(51) Int. Cl.⁴: **F 16 K 31/08**

(22) Anmeldetag: 09.10.85

(30) Priorität: 12.10.84 DE 3437487

(43) Veröffentlichungstag der Anmeldung: 16.04.86
Patentblatt 86/16

(84) Benannte Vertragsstaaten: AT CH FR GB IT LI NL SE

(71) Anmelder: H. Kuhnke GmbH KG, Marktstrasse,
D-2427 Malente (DE)

(72) Erfinder: Klocke, Harald, Rumer Weg 14, D-2427 Malente
(DE)

(74) Vertreter: Wilcken, Thomas, Dipl.-Ing. et al,
Musterbahn 1, D-2400 Lübeck (DE)

(54) **Bistabiles Magnetventil.**

(57) Bei einem derartigen Ventil wird der Anker durch die Kraft von Permanentmagneten in seiner jeweiligen Schaltstellung gehalten. Zur Änderung der Schaltstellung des Ankers werden dem elektrischen Magnetsystem des Ventils elektrische Impulse zugeführt, um eine Änderung des magnetischen Flusses im Jochbereich und damit eine Umstellung des Ankers zu bewirken. Das gesamte Magnetsystem des Ventils ist in einem Gehäuse eingebettet.

Um ein im Bauvolumen wesentlich verkleinertes Magnetventil zur Steuerung von Fluiden zu erhalten, ist wenigstens das erwähnte Gehäuse des Ventils mit Fluidleitungswegen versehen, wobei der den schwenkbar ausgebildeten Anker aufnehmende zentrale Raum des Magnetsystems mit einer den Anker tragenden Membran in zwei dicht voneinander getrennte Kammern unterteilt ist, über die das zu steuernde Fluid geleitet wird, wobei die beiden Enden des Ankers selbst als Schliesskörper dienen, die je nach Ankerstellung entsprechende Einlass- oder Auslassleitungen der erwähnten Kammern schliessen und öffnen.

Patentanwälte
Dr. Hans Wilcken
Dipl. Ing. Thomas Wilcken
Musterbahn 1-2400 Lübeck 1

- 1 -

Anmelder: H. Kuhnke GmbH KG,
         Marktstraße, 2427 Malente


Bistabiles Magnetventil


Die Erfindung betrifft ein bistabiles Magnetventil, bei dem ein in einem Gehäuse liegendes Joch wenigstens eine elektrische, abwechselnd gepulste Spule hält, die einen zentralen Raum umgibt, in dem ein Anker in seinem Schwerpunkt schwenkbar gelagert ist, dessen beide Endbereiche zum Öffnen und Schließen von fluidischen Leitungswegen ausgebildet sind, während die jeweilige Arbeitsstellung des Ankers durch die Kraft von Permanentmagnet gehalten wird.

In den DE-Patentschriften 20 32 361 und 29 00 473 sowie in der DE-OS 20 22 830 ist ein bistabiles Magnetventil der vorgenannten Art beschrieben. Diese vorbekannten Magnetventile weisen ein relativ großes Bauvolumen auf, da derjenige Bereich, der die Leitungswege für das zu steuernde Fluid einschließlich deren Steuerelemente aufweist, in einem gesondeten Gehäuseteil untergebracht ist, der mit dem das bistabile Magnetsystem enthaltende Gehäuseteil zusammengeflanscht ist. Ein großes Bauvolumen des fraglichen Magnetventils verhindert die Anwendung eines solchen Ventils bei engen Platzverhältnissen bzw. führt zu umständlicheren Lösungen, da das Ventil dann an einem ungünstigen Platz angeordnet werden muß und somit längere externe Fluidleitungen erforderlich sind. Ein weiterer Nachteil des die Fluidleitungen aufweisenden Gehäuseteils besteht darin, daß dessen Ausbildung als Mehrwegeventil relativ kompliziert ist, da Übertragungsteile erforderlich sind, die die Bewegungen des Ankers in das Gehäuseteil für die Fluidleitungen übertragen. Ferner hat sich herausgestellt, daß die permanentmagnetische Dichtkraft bei hohen Fluiddrücken zu mangelnder Dichtigkeit führt.

Die Aufgabe der Erfindung besteht in der Schaffung eines Magnetventils der einleitend angeführten Art, das in seinem Bauvolumen beträchtlich verkleinert und auf einfache Weise als raumsparendes Mehrwegeventil ausgebildet ist sowie relativ höhere permanentmagnetische Haltekräfte aufweist.

Die Lösung dieser Aufgabe geht von dem angegebenen Magnetventil aus und kennzeichnet sich dadurch, daß das Ankerschwenklager durch eine den Anker mittig in der Schwerpunktebene umfassende und am Umfang fluiddicht eingespannte Membran gebildet ist, daß die Membran den zentralen Raum in zwei im wesentlichen geschlossene Kammern aufteilt, mit denen die vorzugsweise im Gehäuse integrierten Leitungswege in Verbindung stehen und in die der in der Membran steckender Anker mit jeweils einem seiner Schenkel hineinragt, und daß an den Enden der Ankerschenkel Ventilkörper angeordnet sind, mit denen zumindest einige in den Kammern befindliche Öffnungen der Leitungswege je nach Ankerstellung abgesperrt oder freigegeben werden.

Eine bevorzugte Weiterbildung des erfindungsgemäßen Magnetventils besteht darin, daß die Permanentmagnete im Bereich der Ankerenden angeordnet sind, wobei die Permanentmagnete zu den beiden Ankerenden einen axialen Abstand aufweisen und in diesem Bereich die Jochteile überbrücken.

Durch diese Lösung ist das fragliche Magnetventil in seinem Bauvolumen wesentlich verkleinert, da ein gesondertes Gehäuseteil für die Fluidleitungswege entfällt. Das ohnehin für das Magnetsystem erforderliche Gehäuseteil wird zweckmäßigerweise auch für die Aufnahme der Fluidleitungswege verwendet, wobei ferner der den Schwenkanker enthaltende zentrale Raum als Steuerraum für das zu steuernde Fluid verwendet wird und der Anker selbst unmittelbar als Schließkörper bzw. Ventilkörper dient. Eine besonders kompakte Bauweise des Magnetventils ergibt sich, wenn z.B. die Permanentmagnete als Ringmagnete in dem äußeren Spulenkörper integriert und dort vom Joch umschlossen sind, da dann die fluidführenden Kammern kleiner ausgebildet werden können.

Ein weiterer Vorteil aus dieser Lösung besteht darin, daß auf einfache Weise Mehrwegventile hergestellt werden können, und zwar 2/2-Wegeventile, 3/2-Wegeventile als auch 5/2-Wegeventile bei sonst gleichbleibendem Aufbau. Ferner ergibt sich durch die Membran auch eine praktisch reibungsfreie Lagerung des Schwenkankers, so daß der Anker gegenüber dem magnetischen Fluß in dem Joch empfindlicher ist. Diese relativ hohe Ansprechempfindlichkeit läßt sich übrigens auch nicht mit anderen vorbekannten Ankerlagerungen erreichen, die beispielsweise im GB-Patent 1 117 794 oder in der DE-Offenlegungsschrift 25 11 152 dargestellt und beschrieben sind. Jedenfalls ist die Halterung und Lagerung des Ankers mit einem Torsionsstab insofern nicht günstig. Gleiches gilt, wenn der Anker und zusätzliche Teile des Ventilsystems mit einer Membran gehalten werden, da ein solches Bauprinzip wegen der großen Masse der von der Membran getragenen Teile zu einer trägen Funktion des Ventils führt.

Die Erfindung ist nachstehend anhand mehrerer, in den anliegenden Zeichnungen dargestellter Ausführungsbeispiele näher erläutert. Es zeigen:

Figur     1     ein erstes Ausführungsbeispiel im Axialschnitt,

Figur     2     das Ausführungsbeispiel nach Figur 1 in abgeänderter Form und im axialen Teilschnitt,

Figuren         weitere Ausführungsbeispiele im Axialschnitt,
3 und 3         die hinsichtlich der Fluidleitungswege abgeändert sind,

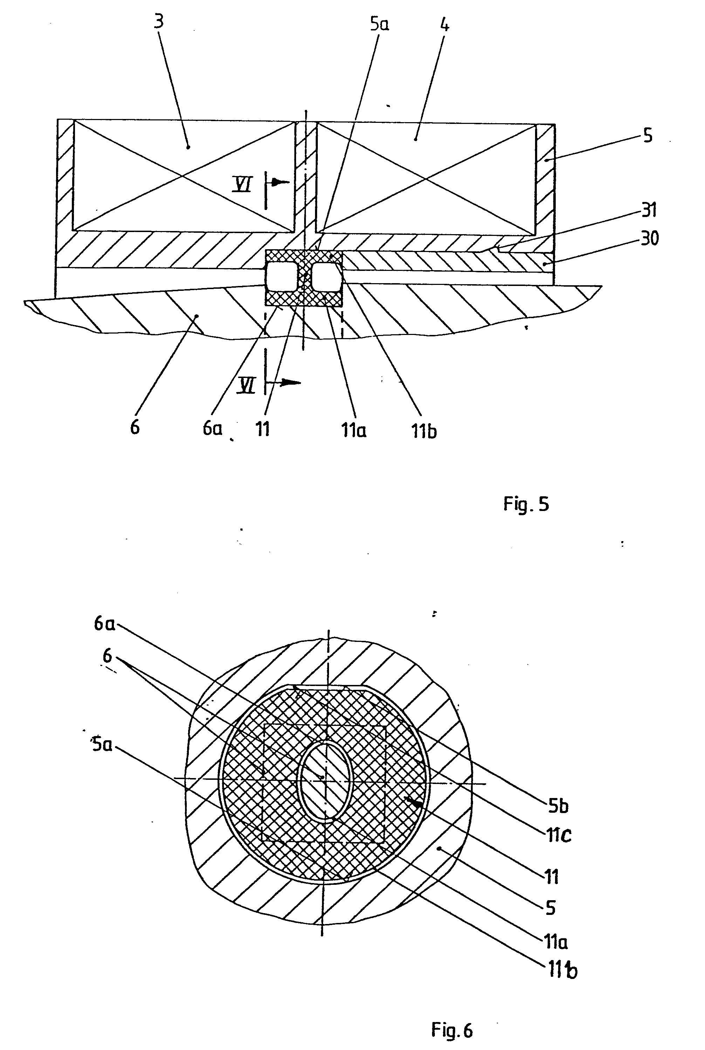

Figuren         in vergrößertem Maßstab Einzelheiten im axialen
5 und 6         Teilschnitt bzw. im Schnitt nach der Linie VI-VI in Figur 5.

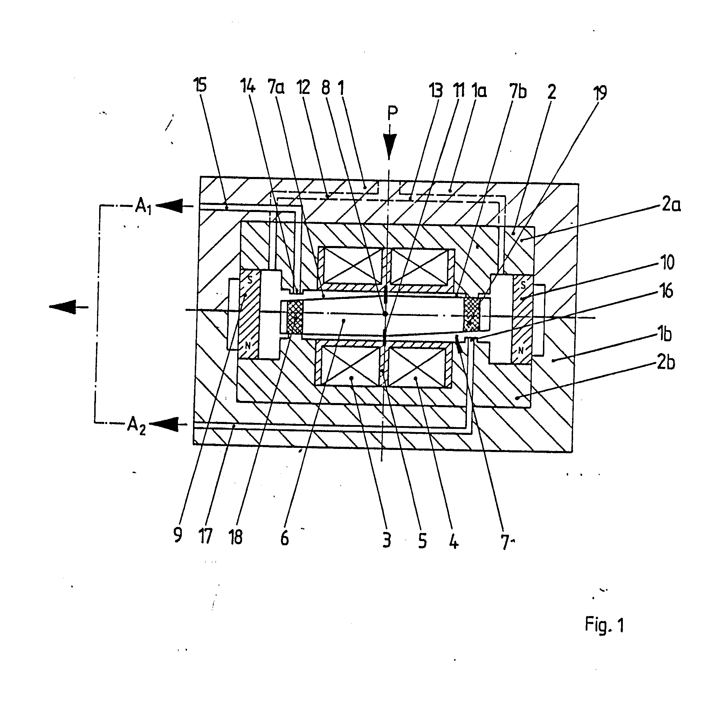

Gemäß Figur 1 besteht das vorgeschlagene Magnetventil aus einem Gehäuse 1, das aufgebaut ist aus den beiden Teilen 1a und 1b, aus einem aus zwei Teilen 2a, 2b bestehenden Joch 2, aus zwei Spulen 3 und 4, wobei die eine Spule relativ zur anderen Spule gegensinnig gewickelt ist, aus einem die Spulen haltenden und im Joch 2 sitzenden Spulenträger 5, aus einem Schwenklager 6, der in dem durch die ringförmigen Spulen 3 und 4 und durch das Joch 2 in üblicher Weise gebildeten zentralen Raum 7 um seinen Schwerpunkt 8 verschwenkbar gelagert ist, und aus zwei Permanentmagneten 9 und 10, die den Enden des Ankers 6 mit axialem Abstand gegenüberliegen und die Jochteile 2a, 2b überbrücken. Der zentrale Raum 7 ist in den sich an die beiden Ankerenden anschließenden Jochbereichen erweitert, um die Permanentmagneten 9, 10 in dem Joch 2 zu befestigen. In dem zentralen Raum 7 ist ferner eine ringförmige Membran 11 vorgesehen, mittels der der Schwenkanker 6 um seinen Schwerpunkt 8 verschwenkbar gelagert ist und die den zentralen Raum in zwei dicht voneinander getrennte Kammern 7a und 7b aufteilt. Die beispielsweise Ausbildung und Lagerung der Membran 11 ist in Verbindung mit den Figuren 5 und 6 näher erläutert.

Ferner sind Leitungswege für das zu steuernde Fluid vorgesehen, die gemäß Figur 1 sowohl in dem Gehäuse 1 als auch in dem Joch 2 verlaufen. Das dargestellte Magnetventil ist ein 2/2-Wegeventil, bei dem das am P-Anschluß ankommende Fluidsignal über die gestrichelt dargestellten Leitungswege 12 und 13 zu dem Kammern 7a bzw. 7b gelangt. Da die Auslaßöffnungen 14 und 16 der Kammern 7a und 7b offen sind, kann das Fluid über die Auslaßleitung 15 als Arbeitssignal A1 und über die andere Auslaßleitung 17 als Arbeitssignal A2 weitergeleitet werden. Die Öffnungen 14 und 16 werden unmittelbar durch den Schwenkanker 6 geöffnet und geschlossen, wofür dieser mit Dichtungslagen 18, 19 versehen ist.

Der dargestellte gemeinsame P-Anschluß kann natürlich auch in zwei getrennte P-Anschlüsse aufgegliedert werden, so daß zwei Fluide getrennt voneinander mit diesem Magnetventil gesteuert werden können. In den Auslaßleitungen 15 und 17 stehen dann die entsprechenden Arbeitssignale A1 und A2 zur Verfügung. Auf diese Weise sind somit zwei 2/2-Wegeventile gegeben.

Ferner können bei gemeinsamen P-Anschluß die beiden Auslaßleitungen 15 und 17 zusammengefaßt werden, wie es strichpunktiert in Figur 1 angedeutet ist. Dadurch wird eine Querschnittssummierung der Auslaßleitungen mit entsprechend starkem Arbeitssignal erreicht.

Die Funktion des beschriebenen Magnetventils ist folgendermaßen. Die Ausgangsstellung des Ventils sei die in Figur 1 gezeigte Stellung des Ankers 6. Zur Umstellung des Ankers und damit zur Schließung der Öffnungen 14 und 16 werden die Spulen 3 und 4 erregt. Deren entgegengesetzter Wicklungssinn bewirkt in Verbindung mit den entgegengesetzten Polen der Permanentmagnete 9 und 10 gemäß Figur 1 einerseits eine Schwächung der Magnetkräfte des einen Permanentmagneten und andererseits eine Stärkung der Magnetkräfte des anderen Permanentmagneten, so daß der Anker verschwenkt wird und die genannten Öffnungen schließt. Danach werden die Spulen entregt, und der Anker 6 wird in der neuen Stellung durch die Kraft der Permanentmagnete gehalten. Es stehen nunmehr keine Signale A1 und A2 zur Verfügung. Zum Öffnen der Öffnungen 14 und 16 werden die Spulen 3 und 4 wiederum erregt, jedoch nun mit umgekehrter Polarität, so daß sich der Anker 6 entsprechend verschwenken kann.

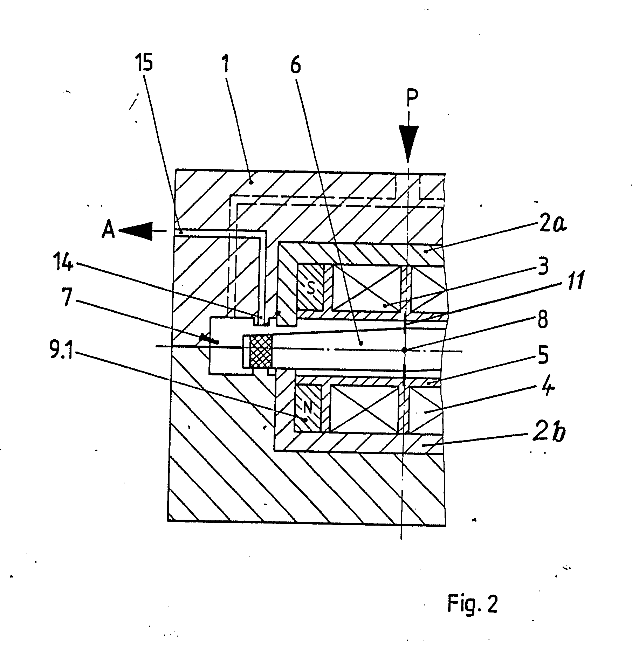

Figur 2 zeigt eine abgeänderte Ausführungsform des Magnetventils nach Figur 1. Die Änderung besteht darin, daß alle Fluidleitungswege in dem Gehäuse 1 vorgesehen sind und daß jedem Ankerende ein Ringmagnet 9.1 zugeordnet ist, wobei die Ringmagnete auf äußeren Flanschen des Spulenträgers 5 sitzen und andererseits von den Jochteilen 2a, 2b umgeben sind. Das Joch 2 und das Gehäuse 1 können dadurch kürzer gebaut werden als im Beispiel nach Figur 1.

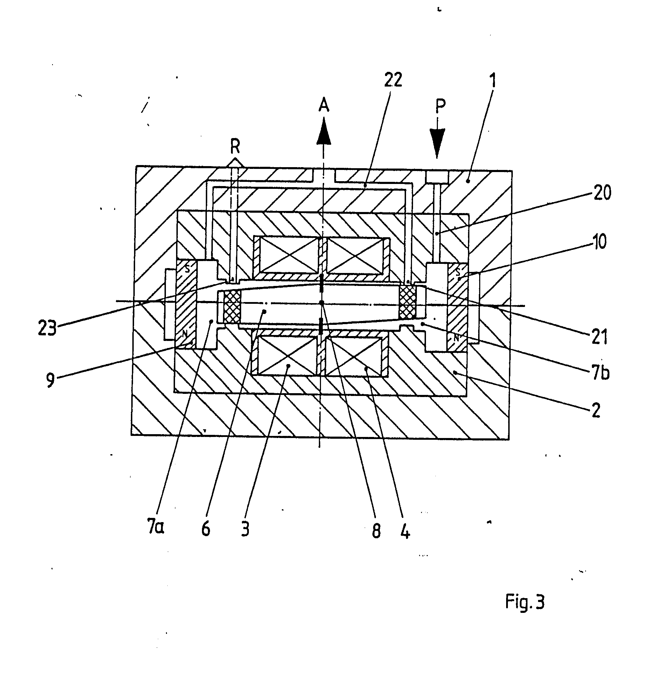

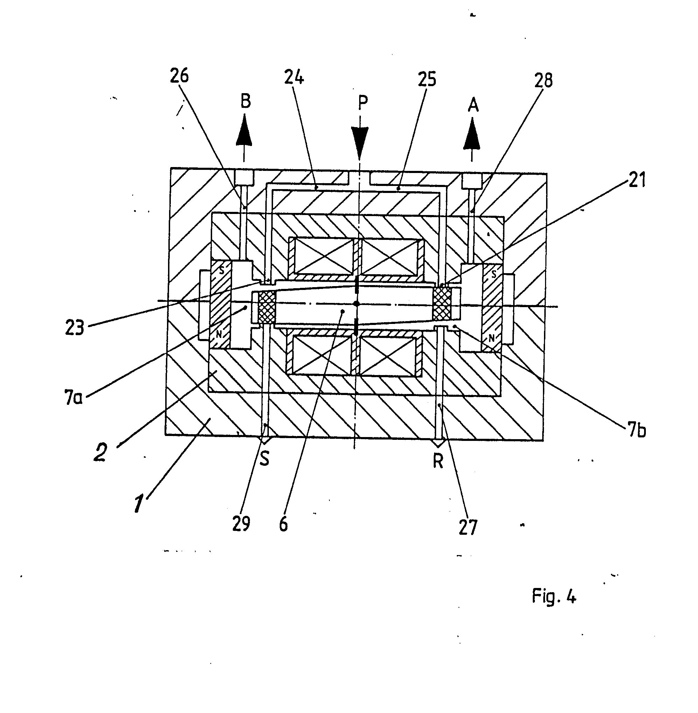

Die Figuren 3 und 4 zeigen weitere Ausführungen in Form eines 3/2-Wegeventils bzw. eines 5/2-Wegeventils. Der Aufbau dieser Ventile unterscheidet sich nur durch den Verlauf der Fluidleitungswege von dem des Magnetventils nach den Figuren 1 und 2. Die Funktion dieser Ventile ist ebenfalls gleich. Gemäß Figur 3 führt vom P-Anschluß eine Zuleitung 20 zur Kammer 7b, die wiederum über die Öffnung 21 und die Auslaßleitung 22 ein Arbeitssignal A zur Verfügung stellt. In der gezeigten Stellung des Ankers 6 ist die Öffnung 21 allerdings geschlossen, so daß der A-Anschluß mit dem Entlüftungsanschluß R kommuniziert, da die Öffnung 23 der anderen Kammer 7a geöffnet ist.

Figur 4 zeigt die 5/2-Wegeventil-Ausführung. Vom gemeinsamen P-Anschluß wird über die Zuleitungen 24, 25 Fluid des Kammern 7a und 7b zugeführt. Im gezeigten Fall ist die Öffnung 23 offen, während die andere Öffnung 21 geschlossen ist, so daß nur über die Auslaßleitung 26 der Kammer 7a ein Arbeitssignal B zur Verfügung steht. Die Kammer 7b ist in diesem Fall über die Entlüftungsleitung 27 mit dem R-Anschluß verbunden. Nach Umschalten des Ankers 6 steht über die Auslaßleitung 28 das Arbeitssignal A zur Verfügung, und die Entlüftungsleitung 29 zum Entlüftungsnaschluß S ist geöffnet.

Die Figuren 5 und 6 zeigen Einzelheiten hinsichtlich der Form und der Anordnung der Membran 11, die zur Lagerung des Ankers 6 dient.

Die ringförmige Membran 11 aus elastischem Material, z.B. Gummi, hat im Querschnitt die Form eines doppelten T (Figur 5), so daß an ihren Rändern Flansche 11a, 11b vorhanden sind. Der ankerseitige Flansch 11a sitzt in einer Nut 6a des Ankers 6, während der spulenseitige Flansch 11b in einer Absetzung 5a des Spulenträgers 5 sitzt. Eine auf die Absetzung geschobene Sicherungshülse 30 verhindert eine axiale Verschiebung der Membran 11, wobei die Hülse durch eine Rastausbildung 31 bekannter Art selbst axial gesichert ist.

In abgeänderter Form können die Flansche 11a, 11b auch

durch Wülste ersetzt sein. Die Verwendung einer Membran zur Lagerung des Ankers 6 hat den Vorteil, daß eine praktisch reibungsfreie Lagerung des Ankers gegeben ist, die eine verringerte elektrische Antriebsenergie zwecks Umsteuerung des Ankers zur Folge hat.

Um eine Verdrehung des Ankers 6 um seine Längsachse zu vermeiden und dadurch ein sicheres Schließen der erwähnten Auslaßöffnungen 14, 16 usw. der Kammer 7a und 7b zu gewährleisten, sind die Nut 6a des Ankers 6 und der in dieser Nut sitzende Membranflansch 11a - im radialen Ankerquerschnitt betrachtet - z.B. ellipsenförmig ausgebildet, wobei die große Ellipsenachse z.B. in der Schwenkebene des Ankers liegt (Figur 6). Anstelle der ellipsenförmigen Ausbildung kann auch eine rechteckige, quadratische oder dergleichen Ausbildung vorgesehen sein.

Falls der durch die Hülse 30 erzeugte Klemmsitz des anderen Flansches 11b der Membran 11 keine drehgesicherte Membranlage im Spulenträger 5 gewährleistet, kann der im allgemeinen kreisrunde Flansch 11b z.B. einen geraden Teil 11c aufweisen, der gegen eine entsprechende Fläche 5b der Absetzung 5a anliegt.

In weiterer Ausgestaltung der vorstehend beschriebenen Magnetventile besteht das Material des Ankers 6 und/oder des Joches 2 aus amorphem Metall. Dieses Material ist extrem schnell ummagnetisierbar, so daß sich dadurch besonders hohe Umschaltfrequenzen des Ankers erzielen lassen und ein entsprechend ausgerüstetes Magnetventil somit sehr schnell arbeitet. Amorphe Metalle sind bekannt und bestehen z.B. aus Legierungen mit 70 bis 80 Atom-% eines oder mehrerer magnetischer Werkstoffe, wie Eisen, Kobalt und Nickel, die zur Feinabstimmung mit einem kleinen Anteil von Chrom oder Molybdän versehen sein können, sowie als Rest aus Metalloiden wie beispielsweise Bor, Silicium, Kohlenstoff oder Phosphor. Derartige Legierungen werden zu amorphen Bändern mit einer Dicke von im allgemeinen 50 Mikrometer geformt, aus denen dann wiederum die entsprechenden Bauteile, - in diesem Fall also Anker und/oder Joch - hergestellt werden.

Obwohl in den vorstehenden Beispielen die Verwendung von zwei elektrischen Spulen, die abwechselnd und jeweils entgegengesetzt gepulst werden, beschrieben worden ist, ist es jedoch auch möglich, nur eine einzige elektrische Spule zu verwenden, die abwechselnd mit jeweils entgegengesetzter Polarität gepulst wird.

**0 177 944**

Anmelder: H. Kuhnke GmbH KG,
         Marktstraße, 2427 Malente

Patentansprüche

1. Bistabiles Magnetventil, bei dem ein in einem Gehäuse liegendes Joch wenigstens eine elektrische, abwechselnd gepulste Spule hält, die einen zentralen Raum umgibt, in dem ein Anker in seinem Schwerpunkt schwenkbar gelagert ist, dessen beide Endbereiche zum Öffnen und Schließen von fluididschen Leitungswegen ausgebildet sind, während die jeweilige Arbeitsstellung des Ankers durch die Kraft von Permanentmagneten gehalten wird, dadurch gekennzeichnet, daß das Ankerschwenklager durch eine den Anker (6) mittig in der Schwerpunktebene umfassende und am Umfang fluiddicht eingespannte Membran (11) gebildet ist, daß die Membran den zentralen Raum (7) in zwei im wesentlichen geschlossene Kammern (7a, 7b) aufteilt, mit denen die vorzugsweise im Gehäuse integrierten Leitungswege (12, 13, 15, 17, 27, 29) in Verbindung stehen und in die der in der Membran steckende Anker mit jeweils einem seiner Schenkel hineinragt, und daß an den Enden der Ankerschenkel Ventilkörper (18, 19) angeordnet sind, mit denen zumindest einige in den Kammern befindliche Öffnungen (14, 16, 21, 23) der Leitungswege je nach Ankerstellung abgesperrt oder freigegeben werden.

2. Magnetventil nach Anspruch 1, dadurch gekennzeichnet, daß die Permanentmagnete (9, 10) im Bereich der Ankerenden angeordnet sind.

3. Magnetventil nach einem der Ansprüche 1 und 2, dadurch gekennzeichnet, daß die Permanentmagnete (9, 10) zu den beiden Ankerenden einen axialen Abstand aufweisen und in diesem Bereich die Jochteile (2a, 2b) überbrükken.

4. Magnetventil nach einem der Ansprüche 1 bis 3, dadurch gekennzeichnet, daß die Membran ringförmig und im Querschnitt doppel-T-förmig ausgebildet ist und mit ihren Flanschteilen (11a, 11b) in nutartigen Vertiefungen (6a, 5a) des Ankers (6) und des Trägers (5) der Spulen (3, 4) sitzt.

5. Magnetventil nach Anspruch 4, dadurch gekennzeichnet, daß die Vertiefung des Spulenträgers (5) als Absetzung (5a) ausgebildet ist, in der eine arretierte Hülse (30) als axiale Sicherung der Membran (11) sitzt.

6. Magnetventil nach Anspruch 4, dadurch gekennzeichnet, daß die Umfangsform der nutartigen Vertiefung (6a) des Ankers (6) und der in dieser Vertiefung sitzende Teil (11a) der Membran (11) ellipsenförmig, rechteckig, quadratisch oder dergleichen ausgebildet sind.

7. Magnetventil nach einem der Ansprüche 1 bis 6, dadurch gekennzeichnet, daß das Material des Ankers (6) und/ oder des Joches (2) ein amorphes Metall ist.

Fig. 1

Fig. 2

Fig. 3

415

Fig. 4

Fig. 5

Fig.6